# FASCICULE DE BREVET EUROPEEN

(11) **EP 2 872 921 B1**
(45) Date de publication et mention de la délivrance du brevet: **17.08.2016**
(21) Numéro de dépôt: 13736542.5
(22) Date de dépôt: 09.07.2013
(51) Int. Cl.: G01S 19/13, G01S 19/02

(54) **SIGNAL RADIO GNSS AVEC MESSAGE DE NAVIGATION AMÉLIORÉ**
GNSS-FUNKSIGNAL MIT VERBESSERTER NAVIGATIONSNACHRICHT
GNSS RADIO SIGNAL WITH AN IMPROVED NAVIGATION MESSAGE

(30) Priorité: 11.07.2012 FR 1256694
(43) Date de publication de la demande: 20.05.2015
(73) Titulaire: Centre National d'Etudes Spatiales, 75039 Paris Cedex 01 (FR)
(72) Inventeur: GRELIER, Thomas, F-31200 Toulouse (FR); RIES, Lionel, F-81290 Viviers Les Montagnes (FR)
(74) Mandataire: Office Freylinger
(86) Numéro de dépôt international: PCT/EP2013/064477
(87) Numéro de publication internationale: WO 2014/009365

(56) Documents cités:
- US-A1- 2010 007 554
- John W. Betz ET AL: "L1C Signal Design Options", , 20 janvier 2006 (2006-01-20), XP055061563, Extrait de l'Internet: URL:http://www.ion.org/search/purchase_pap er.cfm?jp=p&id=6573 [extrait le 2013-04-30]
- STANSELL T ET AL: "GPS L1C: Enhanced Performance, Receiver Design Suggestions, and Key Contributions", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 septembre 2010 (2010-09-24), pages 2860-2873, XP056000390,
- MATTEO PAONNI ET AL: "Quasi-Pilot Signals: Improving Sensitivity and TTFF without Compromises", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 septembre 2011 (2011-09-23), page 1254, XP056000870,

## Description

### Domaine technique

La présente invention concerne le champ technologique de la radionavigation par satellites. L'invention s'intéresse aux signaux de radionavigation émis par les satellites (ci-après « signaux radio GNSS » ou « signaux GNSS »), notamment au message de navigation communiqué par ces signaux aux récepteurs utilisateurs afin de leur permettre ou faciliter le géopositionnement.

### Etat de la technique

Les signaux GNSS (le segment « Signal-in-Space ») représentent la principale interface entre une infrastructure spatiale GNSS (de l'anglais « Global Navigation Satellite System » - système de positionnement par satellites) et ses différents segments utilisateurs. A ce titre, il porte une part importante des performances qui seront accessibles à l'utilisateur dans un environnement et un contexte d'usage donnés. La performance découle en effet des algorithmes de réception utilisés (fonction du contexte d'usage), et de la qualité du signal qui parvient à l'utilisateur (affectée par les conditions de propagation).

Les caractéristiques spectrales et temporelles du signal, telles que les paramètres de fréquence porteuse, de puissance, de modulation (rythme PRN, BPSK, BOC) conditionnent l'essentiel des performances pour l'interopérabilité, la poursuite, la robustesse aux multi-trajets et aux interférences, etc.

Le message de navigation est lui aussi un facteur prépondérant pour les performances. Il détermine les services en terme de contenu, mais également, par l'intermédiaire de sa structure, en terme de disponibilité (robustesse) et de latence (ou de réactivité). Le message de navigation contient, entre autres, un jeu de données d'éphémérides et de correction d'horloge (abréviées « DECH ») du satellite émetteur. Par jeu de DECH, on entend un ensemble de données suffisant pour permettre au récepteur de calculer la position de satellite et l'erreur d'horloge du satellite. Le message de navigation contribue de manière significative à la performance d'acquisition, en particulier au temps d'acquisition (aussi appelé en anglais « Time To First Fix »).

Pour autant, la conception d'un signal GNSS et de son message de navigation sont également le résultat de compromis entre les différents besoins de services et de contenus visés (par exemple et pour Galileo : Open Service (OS) , Safety of Life (SoL), Search And Rescue Return Link Message (SAR RLM), etc.), des objectifs de performances parfois antagonistes (réactivité et robustesse), et des contraintes opérationnelles ou technologiques (interopérabilité, Masse Consommation Volume des satellites, etc.).

Ainsi, les signaux Galileo E1 OS et GPS L1C incorporent de nombreuses évolutions en regard du signal GPS C/A : nouvelle structure de message de navigation, code PRN, modulations optimisées, etc. Tous deux visent entre autres le service ouvert, destiné pour l'essentiel à des récepteurs grand public, et fonctionnant souvent en environnement dégradé (canyon urbain, par exemple). Cependant, ces deux signaux diffèrent de manière significative dans leur conception : le signal GPS L1C ne vise qu'un service ouvert, tandis que le signal Galileo OS a été conçu pour adresser à la fois le service ouvert et fournir des données en temps réel pour l'intégrité (SoL) et la voie retour SAR (SAR RLM). De ce fait, le message Galileo contient non seulement des informations d'éphémérides et de temps (de correction d'horloge), mais également des données additionnelles.

Le document "L1C Signal Design Options" de John W. Betz ET AL décrit un signal GNSS avec deux canaux de données, l'un comprenant des DECH normales, l'autre portant un message de démarrage rapide qui répète constamment des DECH compactes et moins précises. La réception du canal avec le message de démarrage rapide permet de réduire le temps d'acquisition moyen à froid, car les DECH compactes sont émises à une cadence plus élevée que les DECH normales.

### Objet de l'invention

Un objet de la présente invention est l'amélioration du message de navigation au sens de permettre une diminution du temps d'acquisition dans un récepteur ne disposant pas d'informations à priori relatives aux éphémérides et aux horloges, par exemple parce que non assisté ou partiellement assisté.

### Description générale de l'invention

Selon l'invention, un signal radio GNSS comprend un message de navigation transmis en tant que suite de trames, chaque trame étant composée d'une pluralité de sous-trames, dont chacune contient un premier jeu de données d'éphémérides et de correction d'horloge (DECH) suffisant pour le calcul d'une position de satellite et une erreur d'horloge de satellite. Chaque sous-trame contient en outre un second jeu de DECH, plus compact (c.-à-d. de taille plus réduite) que le premier jeu de DECH, mais suffisant pour le calcul à une précision moindre (par comparaison au calcul rendu possible par le premier jeu de DECH) desdites position de satellite et erreur d'horloge de satellite, le second jeu de DECH étant contenu dans chaque sous-trame en au moins deux exemplaires, de sorte à ce que l'écart temporel entre deux exemplaires consécutifs ne dépasse pas 70% de la durée de sous-trame.

Tandis que les messages de navigation existants ou envisagés contiennent un jeu de DECH unique par sous-trame, l'invention propose un message de navigation dans lequel chaque sous-trame contient au moins deux exemplaires d'un second jeu de DECH moins encombrant. Vu que l'écart entre deux exemplaires consécutifs du second jeu de DECH ne dépasse pas 70% de la durée de sous-trame, le temps d'attente maximal (dans le pire des cas, en supposant un décodage réussi du message de navigation) pour la collecte d'un jeu de DECH complet est porté bien au-dessous de la durée de sous-trame. Il résulte par exemple qu'un récepteur fonctionnant en mode non assisté sera en mesure de localiser plus rapidement les satellites qu'il écoute et donc de déterminer sa position. On note que la localisation des satellites ne sera possible qu'avec une précision plus réduite (p.ex. avec une incertitude d'une centaine de mètres au lieu d'une incertitude de quelques mètres). Le géopositionnement basé sur cette localisation de satellites sera donc affecté d'une incertitude plus importante. Cette incertitude augmentée ne sera toutefois que passagère vu que le premier jeu de DECH sera disponible, dans le pire des cas (décodage du message de navigation supposé réussi), après écoulement d'un laps de temps à peu près égal à la durée de sous-trame, si les conditions de réception et de rapport signal à bruit le permettent. On appréciera que dans la perception d'un utilisateur, le temps d'attente moyen (après le démarrage du récepteur) soit fortement réduit.

On remarque que le second jeu de DECH est diffusé en complément du premier jeu de DECH par le même canal de transmission (le message de navigation). Le récepteur peut ainsi réduire son temps d'acquisition à froid sans qu'il ait besoin de recevoir des données d'assistance par un autre canal (A-GNSS).

De préférence, l'écart temporel entre deux exemplaires consécutifs du second jeu de DECH ne dépasse pas 60% de la durée de sous-trame.

Selon un mode de réalisation préféré de l'invention, chaque sous-trame est subdivisée en pages, chaque page contenant un mot de données. Le premier jeu de DECH est réparti à l'intérieur de chaque sous-trame sur plusieurs mots tandis que chaque exemplaire du second jeu de DECH est contenu à l'intérieur de chaque sous-trame dans un seul mot. De préférence, les pages qui contiennent les au moins deux exemplaires du second jeu de DECH sont réparties dans les sous-trames à écarts essentiellement égaux.

Le format du second jeu de données d'éphémérides peut être statique, c.-à-d. invariable dans le temps. En alternative, le format peut être changé de manière dynamique pendant l'envoi du message de navigation. Dans ce cas, les récepteurs doivent être informés, par une voie de communication quelconque, du format actuel. Par exemple, le format du second jeu de DECH pourrait être sélectionné parmi plusieurs formats prédéfinis, le message de navigation comprenant un indicateur du format sélectionné. Le message de navigation pourrait aussi spécifier le format du second jeu de DECH (ce qui est utile surtout si le format est déterminé librement selon les besoins actuels du système).

De préférence, ce second jeu de DECH représente au moins six paramètres orbitaux, le temps de référence, le biais d'horloge de satellite ainsi que la dérive d'horloge de satellite. Dans ce cas, le second jeu de DECH correspond aux paramètres les plus essentiels du premier jeu de DECH, éventuellement avec une autre quantification. Alternativement, le second jeu de DECH peut se présenter en tant qu'ensemble de paramètres d'un modèle mathématique décrivant une orbite de satellite et une erreur d'horloge, différent du modèle mathématique à la base du premier jeu de données d'éphémérides et de correction d'horloge.

Un aspect de l'invention concerne un procédé de positionnement par GNSS. Le procédé comprend (a) la réception d'une pluralité de signaux radio GNSS tels que décrits ci-avant, la réception incluant au moins la détermination de pseudo-distances et l'écoute des messages de navigation des signaux GNSS, (b) le calcul de positions de satellite et d'erreurs d'horloge de satellite sur la base du second jeu de DECH de chaque message de navigation écouté ; et (c) la détermination d'une position d'utilisateur sur la base des pseudo-distances déterminées et des positions de satellite et des erreurs d'horloge de satellite calculées. De préférence, le procédé comprend aussi l'enregistrement du premier jeu de DECH et un nouveau calcul des positions de satellite et des erreurs d'horloge de satellite sur la base du premier jeu de DECH dès que celui-ci est disponible. La détermination d'une position d'utilisateur peut alors être refaite sur la base des éphémérides et données d'horloge plus précises.

Un autre aspect de l'invention concerne un récepteur GNSS comprenant une mémoire contenant un programme d'ordinateur avec des instructions amenant le récepteur GNSS à mettre en oeuvre le procédé décrit en haut lorsque le programme d'ordinateur est exécuté par le récepteur GNSS.

Finalement, un aspect de l'invention concerne un programme d'ordinateur comprenant des instructions amenant un récepteur GNSS à mettre en oeuvre le procédé décrit en haut lorsque le programme d'ordinateur est exécuté par le récepteur GNSS.

### Brève description des dessins

D'autres particularités et caractéristiques de l'invention ressortiront de la description détaillée d'un mode de réalisation avantageux présenté ci-dessous, à titre d'illustration, avec référence aux dessins annexés. Ceux-ci montrent:
Fig. 1: un schéma de la structure d'un message de radionavigation de type Galileo I/NAV prévu sur la composante de signal E1-B ;
Fig. 2: un graphique illustrant la réduction du temps de lecture du second jeu de DECH par rapport au premier jeu de DECH dans l'exemple discuté ;
Fig. 3: un diagramme illustrant un procédé de détermination du format des DECH compactes.

### Description d'une exécution préférée

Le mode de réalisation de l'invention discuté dans la suite se base sur le message de navigation I/NAV émis sur la composante E1-B (voie de données du signal E1 OS) du système de navigation Galileo, dont il propose une modification. Il convient toutefois de noter que ce choix a uniquement été fait à des fins d'illustration de l'invention, qui peut également être mise en oeuvre sur d'autres signaux GNSS (de Galileo, GPS, Glonass, Compass etc. ou de systèmes régionaux.) Pour de plus amples informations sur le message I/NAV, le lecteur est invité à consulter le document « European GNSS (Galileo) Open Service Signal in Space Interface Control Document (ci-après Galileo OS SIS ICD), version 1.1, Septembre 2010, publié par la Commission Européenne sur le site: http://ec.europa.eu/enterprise/policies/satnav/galileo/open-service/index_en.htm.

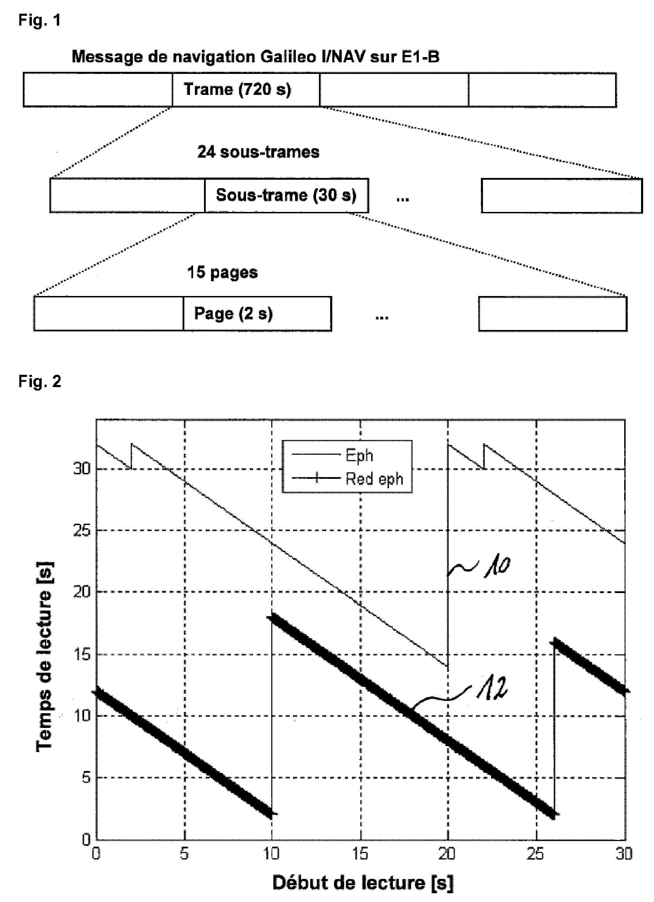

Le message Galileo I/NAV consiste en une trame de 720 secondes, découpée en 24 sous-trames de 30 secondes chacune. Celles-ci sont composées de 15 pages de 2 secondes, chaque page étant composée d'une partie paire et d'une partie impaire de durée 1 seconde. La structure du message I/NAV est schématiquement illustrée à la figure 1.

Les parties paire et impaire d'une page sont composées de 120 bits de données utiles, une page complète contenant donc 240 bits d'information utile. Ces bits sont codés avec un code convolutif (7,1/2). Les 120 bits de données utiles sont transformés en 240 symboles après codage, auxquels est ajouté en tête un motif de synchronisation de 10 symboles. Une demi-page contient donc 250 symboles.

Chaque page contient un champ de données de 128 bits, appelé mot et réparti sur les deux parties de la page (à raison de 16 et 112 bits respectivement).

Les mots contiennent les informations utilisées par le récepteur de navigation pour calculer sa position (éphémérides, temps système Galileo, corrections d'horloge, corrections ionosphériques, almanachs, ...).

Parmi ces informations, seulement trois sont nécessaires à l'établissement d'une première position: les éphémérides, les corrections d'horloge et l'information de temps système. Les autres paramètres sont fournis pour apporter un surcroît de précision.

Dix types de mots sont définis dans le Galileo OS SIS ICD selon leur contenu (n°1 à 10) ; un onzième type (n°0) est réservé pour les mots « spare » (libre), c'est-à-dire ne contenant pas d'information utile. Sur les 128 bits composant un mot, les 6 premiers sont réservés pour l'identification du type de mot. Il reste donc 122 bits pour l'information utile.

Les données d'éphémérides et de correction d'horloge (DECH) standard sont codées sur 4 mots (types de mot 1 à 4, voir Galileo SIS ICD, section 4.3.5). Les DECH standard sont composées de 20 paramètres (16 pour les éphémérides et 4 pour les corrections d'horloge). Les paramètres sont indiqués dans le tableau suivant

| Paramètre | Signification | Bits alloués | Type de mot |
|---|---|---|---|
| Données d'éphémérides | | | |
| t₀ₑ | Temps de référence de l'éphéméride | 14 | 1 |
| Mo | Anomalie moyenne à tₒₑ | 32 | 1 |
| e | excentricité | 32 | 1 |
| A^{1/2} | Racine carrée du demi-grand axe | 32 | 1 |
| Ω₀ | Longitude du noeud ascendant | 32 | 2 |
| i₀ | Angle d'inclinaison du plan orbital | 32 | 2 |
| ω | Argument du périgée | 32 | 2 |
| *i* | Dérivée de l'angle d'inclinaison | 14 | 2 |
| Ω̇ | Dérivée du noeud ascendant | 24 | 3 |
| Δn | Différence de mouvement moyenne de la valeur calculée | 10 | 3 |
| Cᵤₛ | Amplitude du terme de correction harmonique sinus à argument de latitude | 16 | 3 |
| C_{rc} | Amplitude du terme de correction harmonique cosinus au rayon de l'orbite | 16 | 3 |
| Cᵣₛ | Amplitude du terme de correction harmonique sinus au rayon de l'orbite | 16 | 3 |
| C_{ic} | Amplitude du terme de correction harmonique cosinus à l'angle d'inclinaison | 16 | 4 |
| C_{ic} | Amplitude du terme de correction harmonique sinus à l'angle d'inclinaison | 16 | 4 |

| Données de correction d'horloge | | | |
|---|---|---|---|
| t_{oc} | Temps dans la semaine de référence pour la correction d'horloge | 14 | 4 |
| a_{f0} | Coefficient de correction du biais d'horloge | 31 | 4 |
| a_{f1} | Coefficient de correction de dérive d'horloge | 21 | 4 |
| a_{f2} | Coefficient de correction du taux de dérive d'horloge | 6 | 4 |

Les DECH standard sont transmises avec une périodicité de 30 secondes (c.-à-d. au rythme des sous-trames). Au total l'information est codée sur 428 bits.

Le temps système Galileo (GST) est composé de deux paramètres : le numéro de semaine (WN) et le Temps dans la semaine (TOW). Le WN est transmis une fois toutes les 30 secondes (type de mot 5), le TOW étant quant à lui transmis deux fois par sous-trame (types de mot n°5 et 6).

La répartition des mots dans la sous-trame de 30 secondes est la suivante sur E1-B (l'instant 0 correspondant au début d'une sous-trame):

| T₀ (s) | Type de mot | Contenu |
|---|---|---|
| 0 | 2 | Ephémérides (2/4) |
| 2 | 4 | Ephémérides (4/4), Corrections d'horloge |
| 4 | 6 | Corrections iono, GST... |
| 6 | 7 ou 9 | Almanachs (1/2) |
| 8 | 8 ou 10 | Almanachs (2/2) |
| 10 | Réservé | Réservé pour le service SoL |
| 12 | Réservé | |
| 14 | Réservé | |
| 16 | Réservé | |
| 18 | Réservé | |
| 20 | 1 | Ephémérides (1/4) |
| 22 | 3 | Ephémérides (3/4) |
| 24 | 5 | GST-UTC conversion, TOW |
| 26 | 0 (spare) | Non défini dans Galileo OS SIS ICD |
| 28 | 0 (spare) | |

La transmission de l'ensemble des almanachs (jusqu'à 36 satellites) se fait sur la durée d'une trame (720 secondes).

Cinq des 15 mots contenus dans la sous-trame (situés de T0 = 10 à 20 s) sont réservés et deux mots (situés de T0 = 28 à 30 s) sont non définis dans l'ICD Galileo.

Une part importante des bits identifiés comme réservés dans ce document le sont en prévision de l'introduction ultérieure du service SoL :
∘ les 5 mots réservés, identifiés dans le tableau précédent.
∘ les champs réservés de chaque demi-page impaire (cf. tableau 41 de Galileo OS SIS ICD.)

De plus un ensemble de bits sont définis comme « Spare » dans Galileo OS SIS ICD :
∘ les 2 mots « spare » (cf tableau précédent).
∘ le champ « Spare » de chaque demi-page impaire (cf. tableau 41 de Galileo OS SIS ICD.)

Au total, cette part représente un total de 1646 bits sur 3600 bits diffusés toutes les 30 secondes.

Le présent exemple conforme à l'invention s'inscrit dans le contexte où il serait possible de faire une utilisation partielle des bits actuellement réservés pour le SoL pour améliorer la performance du service ouvert Galileo (robustesse et TTFF).

On note que les DECH standard mentionnées ci-dessus correspondent à un premier jeu de DECH suffisantes pour permettre à un récepteur de calculer la position du satellite concerné ainsi que de corriger l'horloge de celui-ci.

Pour arriver à un signal GNSS conforme à un mode de réalisation préféré de l'invention, il est proposé, par exemple, de modifier le message Galileo I/NAV en intégrant dans chaque sous-trame un second jeu de DECH, plus compact que le jeu de DECH standard, mais suffisant pour le calcul à une précision moindre de la position de satellite et de l'erreur d'horloge. En particulier, le second jeu de DECH est inséré dans chaque sous-trame à deux reprises.

Dans de cadre de l'exemple illustré, les mots aux instants T₀=10 s et T₀=26 s sont remplacés par un mot d'un nouveau type contenant chacun un exemplaire du second jeu de DECH.

La trame obtenue se présente comme dans le tableau ci-dessous :

| T₀ (s) | Type de mot | Contenu |
|---|---|---|
| 0 | 2 | Ephémérides (2/4) |
| 2 | 4 | Ephémérides (4/4), Corrections d'horloge |
| 4 | 6 | Corrections iono, GST... |
| 6 | 7 ou 9 | Almanachs (1/2) |
| 8 | 8 ou 10 | Almanachs (2/2) |
| 10 | nouveau | DECH compactes |
| 12 | Réservé | Réservé pour le service SoL |
| 14 | Réservé | |
| 16 | Réservé | |
| 18 | Réservé | |
| 20 | 1 | Ephémérides (1/4) |
| 22 | 3 | Ephémérides (3/4) |
| 24 | 5 | GST-UTC conversion, TOW |
| 26 | nouveau | DECH compactes |
| 28 | 0 (spare) | Non défini dans Galileo OS SIS ICD |

La taille du mot du nouveau type est égale à la taille des autres mots et peut recevoir autant de bits de données utiles (c.-à-d. 122). Si on demande une précision des DECH compactes de l'ordre de grandeur de 100 m pendant 95% du temps, il est préférable de ne conserver que les 9 paramètres suivants :
∘ 6 paramètres Kepleriens
∘ Le temps de référence
∘ Le biais et la dérive de la correction d'horloge

La configuration de diffusion des DECH compactes dans le message I/NAV (envoi double aux instants T₀ = 10 s et T₀ = 26 s) permet d'atteindre un temps moyen de lecture inférieur à 10 s. Le temps de lecture des DECH compactes dépend de l'instant initial de réception du message (T₀). Il est tracé sur la figure 2 (dans l'hypothèse où l'information est décodée sans erreur et en une seule fois): La courbe 10 indique le temps de lecture du jeu (entier) de DECH standard, la courbe 12 le temps de lecture du jeu de DECH compactes en fonction du début de la lecture à l'intérieur d'une sous-trame. On remarque que le temps de lecture moyen des DECH standard est de 25,4 s tandis que le temps de lecture des DECH compactes ne s'élève qu'à 9,5 s. Le temps de lecture maximal des DECH standard (en supposant un décodage réussi) est de 32 s. La valeur correspondante pour les DECH compactes s'élève à 18 s. La réduction des temps moyen et maximal de lecture résultent en un délai de première acquisition (time to first fix) nettement réduit. On note toutefois que la précision de positionnement qui pourra être atteinte avec les DECH compactes sera inférieure à la précision qui pourra être obtenue avec le DECH standard. Comme toutefois le jeu de DECH standard sera disponible dans le récepteur après avoir reçu une sous-trame entière (donc au plus tard après 32 s en supposant que le décodage réussisse), le manque de précision est passager et ne présente pas d'inconvénient important.

En ce qui concerne la génération et la diffusion des DECH compactes, on note que celles-ci peuvent être calculées à partir des DECH standard (aussi DECH « nominales »), en fonction de la précision de positionnement souhaitée, de la quantité de bits disponibles pour leur diffusion dans le message de navigation et de la dynamique des DECH standard.

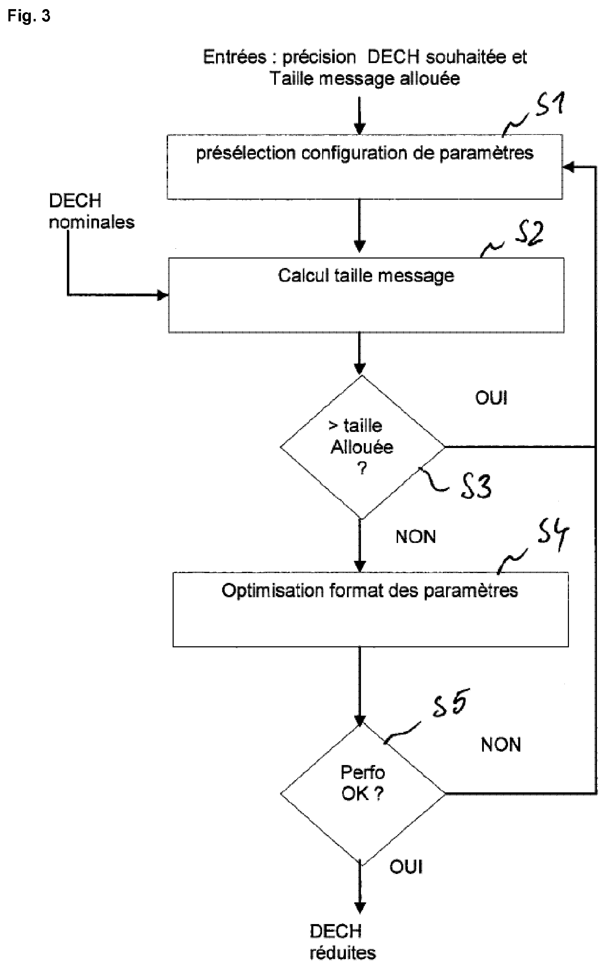

Schématiquement, un procédé de génération est illustré par le diagramme de la figure 3. On considère une combinaison de paramètres de référence (caractérisés par leur type et leur pas de quantification), sélectionnée parmi une liste de combinaisons de référence définies au préalable, et fournissant un calcul d'orbite et de correction d'horloge répondant a priori au besoin (étape S1).

On évalue ensuite la plage de variations des paramètres dans les DECH standard et on déduit le nombre de bits de quantification nécessaire en fonction du pas de quantification (étape S2).

Si le nombre de bits nécessaires est inférieur au nombre de bits disponibles (sortie NON à l'étape S3), on détermine un ensemble de combinaisons de paramètres, construites par réduction du pas de quantification et/ou augmentation du nombre de paramètres, tout en respectant la contrainte du nombre de bits disponibles (étape S4). On teste la performance de ces combinaisons et on détermine la combinaison optimale.

Si la précision obtenue avec cette combinaison de paramètres (type, nombre de bits, quantification) est conforme aux exigences (étape S5), le format des DECH compactes est fixé. Les DECH compactes sont alors calculées par application de ce format.

Si le nombre de bits nécessaires est supérieur au nombre de bits disponibles (sortie OUI à l'étape S3) ou si la performance visée n'est pas obtenue (sortie NON à l'étape S5), une nouvelle combinaison de paramètres de référence est choisie (retour à l'étape S1 ).

Le format du jeu de DECH compactes (type de paramètres, nombre de bits quantification) peut être statique. Dans ce cas de format statique, les récepteurs GNSS peuvent être configurés une fois pour toutes à la fabrication. Exemple :

| **Type paramètre DECH** | **Nb bits** | **Quantif** |
|---|---|---|
| P₁ | B₁ | Q₁ |
| P₂ | B₂ | Q₂ |
| ... | ... | ... |
| P_{N} | B_{N} | Q_{N} |

Alternativement, plusieurs formats de DECH compactes peuvent être prédéfinis. Dans ce cas, le segment de contrôle du GNSS peut sélectionner le format optimal parmi l'ensemble des formats prédéfinis. Les récepteurs GNSS sont alors informés des différents formats prédéfinis (par configuration à la fabrication, par téléchargement du protocole, ou autre). Un identifiant de format doit être communiqué aux récepteurs afin qu'ils puissent utiliser les DECH compactes. Ceci peut se faire par inclusion d'un identifiant dans le message de navigation ou par diffusion de l'identifiant par toute autre voie de communication.

Plusieurs variantes de cette option sont concevables. Selon une première variante, les combinaisons de paramètres diffèrent uniquement au niveau du pas de quantification, les types de paramètres et le nombre de bits respectifs étant identiques.

Exemple : ensemble de 2 combinaisons (2 formats prédéfinis parmi lesquels le segment de contrôle peut choisir).

| **Combinaison 1** | | | **Combinaison 2** | | |
|---|---|---|---|---|---|
| **Type paramètre** | **Nb bits** | **Quantif** | **Type paramètre** | **Nb bits** | **Quantif** |
| P₁ | B₁ | Q₁ | P₁ | B₁ | Q'₁ |
| P₂ | B₂ | Q₂ | P₂ | B₂ | Q'₂ |
| ... | ... | ... | ... | ... | ... |
| P_{N} | B_{N} | Q_{N} | P_{N} | B_{N} | Q'_{N} |

Selon une deuxième variante, on n'applique pas de contrainte sur les combinaisons de paramètres (les types, nombre de bits, et pas de quantification peuvent être différents).

### Exemple : 2 combinaisons, la première à N paramètres, la seconde à K paramètres

| **Combinaison 1** | | | **Combinaison 2** | | |
|---|---|---|---|---|---|
| **Type paramètre** | **Nb bits** | **Quantif** | **Type paramètre** | **Nb bits** | **Quantif** |
| P₁₁ | B₁ | Q₁₁ | P₁₂ | B₁₂ | Q₁₂ |
| P₂₁ | B₂ | Q₂₁ | P₂₂ | B₂₂ | Q₂₂ |
| ... | ... | ... | ... | ... | ... |
| | | | P_{K2} | B_{K2} | Q_{K2} |
| P_{N1} | B_{N1} | Q_{N} | | | |

Il est également concevable que le segment de contrôle choisisse la combinaison optimale de paramètres DECH (définis par leur type, nombre de bits et pas de quantification) à diffuser, sans contrainte sur le format des paramètres, ce dernier étant dans ce cas indiqué au récepteur par ailleurs (par exemple soit dans le message de navigation, soit par un système externe).

## Revendications

1. Signal radio GNSS comprenant un message de navigation transmis en tant que suite de trames, chaque trame étant composée d'une pluralité de sous-trames, dont chacune contient un premier jeu de données d'éphémérides et de correction d'horloge suffisant pour le calcul d'une position de satellite et une erreur d'horloge de satellite, **caractérisé en ce que** chaque sous-trame contient en outre un second jeu de données d'éphémérides et de correction d'horloge, plus compact que le premier jeu de données d'éphémérides et de correction d'horloge, mais suffisant pour le calcul à une précision moindre de ladite position de satellite et de ladite erreur d'horloge de satellite, le second jeu de données d'éphémérides et de correction d'horloge étant contenu dans chaque sous-trame en au moins deux exemplaires de sorte à ce que l'écart temporel entre deux exemplaires consécutifs ne dépasse pas 70% de la durée de sous-trame.

2. Signal radio GNSS selon la revendication 1, dans lequel l'écart temporel entre deux exemplaires consécutifs ne dépasse pas 60% de la durée de sous-trame.

3. Signal radio GNSS selon la revendication 1 ou 2, dans lequel chaque sous-trame est subdivisée en pages, chaque page contenant un mot de données, dans lequel ledit premier jeu de données d'éphémérides et de correction d'horloge est réparti à l'intérieur de chaque sous-trame sur plusieurs mots et dans lequel chaque exemplaire du second jeu de données d'éphémérides et de correction d'horloge est contenu à l'intérieur de chaque sous-trame dans un seul mot.

4. Signal radio GNSS selon la revendication 3, dans lequel les pages qui contiennent les au moins deux exemplaires du second jeu de données d'éphémérides et de correction d'horloge sont réparties dans les sous-trames à écarts essentiellement égaux.

5. Signal radio GNSS selon l'une quelconque des revendications 1 à 4, dans lequel le format du second jeu de données d'éphémérides et de correction d'horloge est invariable dans le temps.

6. Signal radio GNSS selon l'une quelconque des revendications 1 à 4, dans lequel le format du second jeu de données d'éphémérides et de correction d'horloge est sélectionné parmi plusieurs formats prédéfinis, le message de navigation comprenant un indicateur du format sélectionné.

7. Signal radio GNSS selon l'une quelconque des revendications 1 à 4, dans lequel le message de navigation spécifie le format du second jeu de données d'éphémérides et de correction d'horloge.

8. Signal radio GNSS selon l'une quelconque des revendications 1 à 7, dans lequel le second jeu de données d'éphémérides et de correction d'horloge représente au moins six paramètres kepleriens, le temps de référence, le biais d'horloge de satellite ainsi que la dérive d'horloge de satellite.

9. Signal radio GNSS selon l'une quelconque des revendications 1 à 7, dans lequel le second jeu de données d'éphémérides et de correction d'horloge se présente en tant qu'ensemble de paramètres d'un modèle mathématique décrivant une orbite de satellite et une erreur d'horloge différent du modèle mathématique à la base du premier jeu de données d'éphémérides et de correction d'horloge.

10. Procédé de positionnement par GNSS comprenant :
la réception d'une pluralité de signaux radio GNSS selon l'une quelconque des revendications 1 à 9, ladite réception incluant la détermination de pseudo-distances et l'écoute des messages de navigation des signaux GNSS,
le calcul de positions de satellite et d'erreurs d'horloge de satellite sur la base du second jeu de données d'éphémérides et de correction d'horloge de chaque message écouté ; et
la détermination d'une position d'utilisateur sur la base des pseudo-distances déterminées et des positions de satellite et des erreurs d'horloge de satellite calculées.

11. Récepteur GNSS comprenant une mémoire contentant un programme d'ordinateur avec des instructions amenant le récepteur GNSS à mettre en oeuvre le procédé selon la revendication 10 lorsque le programme d'ordinateur est exécuté par le récepteur GNSS.

12. Programme d'ordinateur comprenant des instructions amenant un récepteur GNSS à mettre en oeuvre le procédé selon la revendication 10 lorsque le programme d'ordinateur est exécuté par le récepteur GNSS.

## Patentansprüche

1. GNSS-Funksignal, das eine Navigationsnachricht enthält, die als Folge von Rahmen übertragen wird, wobei jeder Rahmen aus einer Vielzahl von Unterrahmen besteht, von denen jeder einen ersten Satz von Ephemeriden- und Taktkorrektur-Daten enthält, der für die Berechnung einer Satellitenposition und eines Satellitentaktfehlers ausreicht, **dadurch gekennzeichnet, dass** jeder Unterrahmen ferner einen zweiten Satz von Ephemeriden- und Taktkorrektur-Daten enthält, der kompakter als der erste Satz von Ephemeriden- und Taktkorrektur-Daten ist, jedoch für die Berechnung der Satellitenposition und des Satellitentaktfehlers mit einer geringeren Präzision ausreicht, wobei der zweite Satz von Ephemeriden- und Taktkorrektur-Daten in jedem Unterrahmen in mindestens zwei Exemplaren enthalten ist, so dass der zeitliche Abstand zwischen zwei aufeinander folgenden Exemplaren 70 % der Unterrahmendauer nicht überschreitet.

2. GNSS-Funksignal nach Anspruch 1, wobei der zeitliche Abstand zwischen zwei aufeinander folgenden Exemplaren 60 % der Unterrahmendauer nicht überschreitet.

3. GNSS-Funksignal nach Anspruch 1 oder 2, wobei jeder Unterrahmen in Seiten unterteilt ist, wobei jede Seite ein Datenwort enthält, wobei der erste Satz von Ephemeriden- und Taktkorrektur-Daten im Inneren jedes Unterrahmens über mehrere Wörter verteilt ist und wobei jedes Exemplar des zweiten Satzes von Ephemeriden- und Taktkorrektur-Daten im Inneren jedes Unterrahmens in einem einzigen Wort enthalten ist.

4. GNSS-Funksignal nach Anspruch 3, wobei die Seiten, welche die mindestens zwei Exemplare des zweiten Satzes von Ephemeriden- und Taktkorrektur-Daten enthalten, in den Unterrahmen mit im Wesentlichen gleichen Abständen verteilt sind.

5. GNSS-Funksignal nach einem der Ansprüche 1 bis 4, wobei das Format des zweiten Satzes von Ephemeriden- und Taktkorrektur-Daten über die Zeit unveränderlich ist.

6. GNSS-Funksignal nach einem der Ansprüche 1 bis 4, wobei das Format des zweiten Satzes von Ephemeriden- und Taktkorrektur-Daten aus mehreren vordefinierten Formaten ausgewählt ist, wobei die Navigationsnachricht einen Indikator des ausgewählten Formats enthält.

7. GNSS-Funksignal nach einem der Ansprüche 1 bis 4, wobei die Navigationsnachricht das Format des zweiten Satzes von Ephemeriden- und Taktkorrektur-Daten spezifiziert.

8. GNSS-Funksignal nach einem der Ansprüche 1 bis 7, wobei der zweite Satz von Ephemeriden- und Taktkorrektur-Daten mindestens sechs Keplersche Parameter, die Referenzzeit, den Satellitentaktbias sowie den Satellitentaktversatz repräsentiert.

9. GNSS-Funksignal nach einem der Ansprüche 1 bis 7, wobei der zweite Satz von Ephemeriden- und Taktkorrektur-Daten die Form einer Gesamtheit von Parametern eines mathematischen Modells aufweist, das eine Satellitenbahn und einen Taktfehler beschreibt und von dem mathematischen Modell verschieden ist, auf dem der erste Satz von Ephemeriden- und Taktkorrektur-Daten basiert.

10. Verfahren zur Positionsbestimmung per GNSS, umfassend:
das Empfangen einer Vielzahl von GNSS-Funksignalen nach einem der Ansprüche 1 bis 9, wobei das Empfangen das Bestimmen von Pseudo-Distanzen und das Abhören der Navigationsnachrichten der GNSS-Signale umfasst,
das Berechnen von Satellitenpositionen und von Satellitentaktfehlern auf der Basis des zweiten Satzes von Ephemeriden- und Taktkorrektur-Daten jeder abgehörten Nachricht; und
das Bestimmen einer Nutzerposition auf der Basis der bestimmten Pseudo-Distanzen und der berechneten Satellitenpositionen und Satellitentaktfehler.

11. GNSS-Empfänger, der einen Speicher aufweist, der ein Computerprogramm mit Anweisungen enthält, die bewirken, dass der GNSS-Empfänger das Verfahren nach Anspruch 10 durchführt, wenn das Computerprogramm vom GNSS-Empfänger ausgeführt wird.

12. Computerprogramm, das Anweisungen enthält, die bewirken, dass ein GNSS-Empfänger das Verfahren nach Anspruch 10 durchführt, wenn das Computerprogramm vom GNSS-Empfänger ausgeführt wird.

## Claims

1. A GNSS radio signal comprising a navigation message transmitted as a sequence of frames, each frame being composed of a plurality of subframes, each of which contains a first set of ephemeris and clock correction data sufficient for calculating a satellite position and a satellite clock error, **characterized in that** each subframe furthermore contains a second set of ephemeris and clock correction data, more compact than the first set of ephemeris and clock correction data, but sufficient for calculating said satellite position and said satellite clock error to a lesser degree of accuracy, at least two copies of the second ephemeris and clock correction data being present in each subframe, such that the timing difference between two consecutive copies does not exceed 70% of the subframe duration.

2. The GNSS radio signal according to claim 1, in which the timing difference between two consecutive copies does not exceed 60% of the subframe duration.

3. The GNSS radio signal according to claim 1 or claim 2, in which each subframe is subdivided into pages, each page containing a data word, in which said first set of ephemeris and clock correction data is spread over a plurality of words within each subframe and in which each copy of the second set of ephemeris and clock correction data is present in a single word within each subframe.

4. The GNSS radio signal according to claim 3, in which the pages which contain the at least two copies of the second set of ephemeris and clock correction data are spread in the subframes at substantially equal spacings.

5. The GNSS radio signal according to any one of claims 1 to 4, in which the format of the second set of ephemeris and clock correction data is invariable over time.

6. The GNSS radio signal according to any one of claims 1 to 4, in which the format of the second set of ephemeris and clock correction data is selected from a plurality of predefined formats, the navigation message comprising an indicator of the selected format.

7. The GNSS radio signal according to any one of claims 1 to 4, in which the navigation message specifies the format of the second set of ephemeris and clock correction data.

8. The GNSS radio signal according to any one of claims 1 to 7, in which the second set of ephemeris and clock correction data represents at least six Kepler parameters, the reference time, the satellite clock bias together with the satellite clock drift.

9. The GNSS radio signal according to any one of claims 1 to 7, in which the second set of ephemeris and clock correction data takes the form of a set of parameters of a mathematical model describing a satellite orbit and a clock error which differs from the mathematical model on which the first set of ephemeris and clock correction data is based.

10. A GNSS positioning method comprising:
receiving a plurality of GNSS radio signals according to any one of claims 1 to 9, said receiving including determination of pseudo-distances and monitoring of the navigation messages of the GNSS signals,
calculating satellite positions and satellite clock errors on the basis of the second set of ephemeris and clock correction data of each monitored message; and
determining a user position on the basis of the determined pseudo-distances and the calculated satellite positions and satellite clock errors.

11. A GNSS receiver comprising memory means containing a computer program with instructions causing the GNSS receiver to carry out the method according to claim 10 when the computer program is run by the GNSS receiver.

12. A computer program comprising instructions causing a GNSS receiver to carry out the method according to claim 10 when the computer program is run by the GNSS receiver.
